Europäisches Patentamt

European Patent Office

Office européen des brevets

(11) Veröffentlichungsnummer: **0 219 715**
**A1**

# (12) EUROPÄISCHE PATENTANMELDUNG

(21) Anmeldenummer: 86113237.1

(22) Anmeldetag: 26.09.86

(51) Int. Cl.⁴ **D21F 1/10**

(30) Priorität: 26.09.85 DE 3534264

(43) Veröffentlichungstag der Anmeldung:
29.04.87 Patentblatt 87/18

(84) Benannte Vertragsstaaten:
AT BE CH DE FR GB IT LI NL SE

(71) Anmelder: SITEG Siebtechnik GmbH
Enscheder Strasse 18a
D-4422 Ahaus-Alstätte(DE)

(72) Erfinder: Lefferts, Johannes
Oldenkottebrink 85
NL-7544 LM Enschede(NL)

(74) Vertreter: Abitz, Walter, Dr.-Ing. et al
Abitz, Morf, Gritschneder, Freiherr von
Wittgenstein Postfach 86 01 09
D-8000 München 86(DE)

(54) Spiralgliederband mit Füllspiralen, die um den Steckdraht gewickelt sind.

(57) Es wird ein Spiralgliederband mit einer Vielzahl von Kunststoffspiralen (1) beschrieben, die aus flachen Windungsschenkeln (3) und Windungsbögen (2) bestehen, wobei die Windungsbögen (2) einer Spirale (1) reißverschlußartig mit den Windungsbögen (2) der benachbarten Spirale (1) ineinandergreifen, und mit Steckdrähten (6), die in die Kanäle eingeschoben sind, die durch die ineinandergreifenden Windungsbögen (2) jeweils zweier Spiralen (1) gebildet werden, wobei der freie Raum zwischen nebeneinanderliegenden Windungsbögen (2) einer Spirale (1) ausgefüllt ist. Die Ausfüllung des Raums zwischen den nebeneinanderliegenden Windungsbögen (2) einer Spirale erfolgt durch Füllspiralen (5), die eng um die Steckdrähte (6) gewickelt sind. Der freie Innenraum (8) der Spiralen (1) kann durch ein Füllmaterial (7) ausgefüllt sein. Das Material der Füllspiralen (5) ist weicher oder hat einen niedrigeren Schmelzpunkt als das der Spiralen (1).

FIG.3

## Spiralgliederband mit Füllspiralen, die um den Steckdraht gewickelt sind.

Die Erfindung betrifft ein Spiralgliederband nach dem Oberbegriff des Patentanspruches 1.

Bei einem derartigen, aus der US 4 500 590 bekannten Spiralgliederband werden die Räume zwischen nebeneinanderliegenden Windungsbögen derselben Spirale dadurch ausgefüllt, daß ein ummantelter Steckdraht verwendet wird, wobei die Ummantelung durch Wärme erweicht und verformt wird, so daß sie in diese freien Räume gedrückt wird. Nachteilig ist hierbei, daß keine einfachen Monofilamente als Steckdrähte verwendet werden können. Dadurch, daß sich die Windungsbögen und zum Teil auch die Windungsschenkel der Spiralen sehr weit in das weiche Material der Ummantelung eingraben und der Querschnitt der Steckdrähte an diesen Stellen sehr flach wird, besteht eine nahezu formschlüssige Verbindung zwischen den Steckdrähten und den Spiralen, so daß die Scharnierwirkung der Steckdrähte stark eingeschränkt ist. Durch die Ummantelung wird daher die Geschmeidigkeit und Biegsamkeit des Spiralgliederbandes in Längsrichtung eingeschränkt.

Nach den DE 35 04 373 und 35 11 166 (Stand der Technik gem. PatG § 3 (2) ) werden diese freien Räume durch die Verwendung profilierter Steckdrähte oder Spiralen mit stark verbreiterten Windungsköpfen ausgefüllt.

Der Erfindung liegt die Aufgabe zugrunde, ein Spiralgliederband der eingangs genannten Art zu - schaffen, bei dem die Räume zwischen den nebeneinanderliegenden Windungsbögen einer Spirale in einfacher Weise ausgefüllt werden, ohne daß die Biegsamkeit des Spiralgliederbandes in Längsrichtung beeinträchtigt wird.

Diese Aufgabe wird durch die kennzeichnenden Merkmale des Patentanspruches 1 gelöst.

Bevorzugte Ausgestaltungen der Erfindung sind Gegenstand der Unteransprüche.

Die durch die Erfindung erzielten Vorteile bestehen insbesondere darin, daß diese Räume nahezu vollständig ausgefüllt werden können. Bei der Verwendung eines ummantelten Steckdrahtes, wie er aus US 4 500 590 bekannt ist, müssen die Spiralen innerhalb sehr kurzer Abstände in das Material des Steckdrahtes eindringen und das Material des Mantels verdrängen. Die dazwischenliegenden Teile des Mantels sollen möglichst unberührt stehenbleiben. Wegen der viskosen, kohärenten Struktur des Steckdrahtmantels, werden jedoch die dazwischenliegenden Bereiche ebenfalls zusammengedrückt, wie es in Fig. 4 der US 4 500 590 erkennbar ist, so daß sich das Material des Steckdrahtmantels nicht überall eng an die eindringenden Windungsbögen anlegt, sondern wellenförmig verformt wird.

Dadurch, daß die Füllspiralen nicht fest mit den Steckdrähten verbunden sind, drehen sie sich bei einer Drehung der Spiralen um den Steckdraht teilweise mit und setzen einer Drehung der Spiralen um die Steckdrähte praktisch keinen Widerstand entgegen.

Wie in DE 35 04 373 in Verbindung mit Fig. 1 erläutert wird, ist das Ausfüllen dieser Räume, die dort als Trapezflächen 5 bezeichnet werden, erforderlich, wenn die Durchlässigkeit des Spiralgliederbandes auf Werte erniedrigt werden soll, die nur durch das Ausfüllen der Innenräume der Spiralen mittels Füllmaterial nicht erreichbar sind.

Werden diese Räume dagegen durch Füllspiralen ausgefüllt, die eng um die Steckdrähte gewickelt sind, so legt sich das Material der Füllspiralen bzw. die Einzelfilamente bei multifilen Füllspiralen enger an die Windungsbögen an, so daß die Räume besser ausgefüllt werden.

Die Verwendung eines Kunststoffmaterials mit niedrigem Schmelzpunkt für die Füllspiralen hat den Vorteil, daß sich die Füllspiralen leichter der Teilung der Spiralen anpassen. Die Spiralen dringen dadurch stellenweise auch in das Material der Füllspiralen ein, so daß nicht die Notwendigkeit besteht, die Teilung der Füllspiralen exakt an die der Spiralen anzupassen. Um andererseits zu verhindern, daß die Füllspiralen von den Spiralen vollständig durchschnitten werden, ist es zweckmäßig, für die Füllspiralen Kern-Mantel-Drähte zu verwenden, wobei der Kern aus einem harten Material, z.B. Polyester, und der Mantel aus weichem Material mit niedrigem Schmelzpunkt, z.B. Polypropylen, besteht. Dadurch wird vermieden, daß Teile der Füllspiralen von den Spiralen beim Thermofixieren herausgeschnitten werden und aus dem Spiralgliederband fallen.

Ausführungsbeispiele der Erfindung werden nachfolgend anhand der Zeichnung erläutert. Es zeigen:

Fig. 1 einen Steckdraht mit herumgewickelter Füllspirale;

Fig. 2 den Steckdraht von Fig. 1 mit den daran angreifenden Windungsbögen der Spiralen;

Fig. 3 einen kleinen Bereich eines Spiralgliederbandes nach Fig. 2 im Längsschnitt;

Fig. 4 einen Steckdraht mit eng gewickelter Füllspirale;

Fig. 5 den Steckdraht von Fig. 4 mit daran angreifenden Windungsbögen;

Fig. 6 bis 8 Steckdrähte mit verschiedenen Ausführungsformen von Füllspiralen;

Fig. 9 im Querschnitt einen Steckdraht mit herumgewickelter Füllspirale;

Fig. 10 eine Spirale aus einem Monofil mit einer nach innen zeigenden Kante und

Fig. 11 eine Darstellung ähnlich der von Fig. 9 mit einem Steckdraht von flachem Querschnitt.

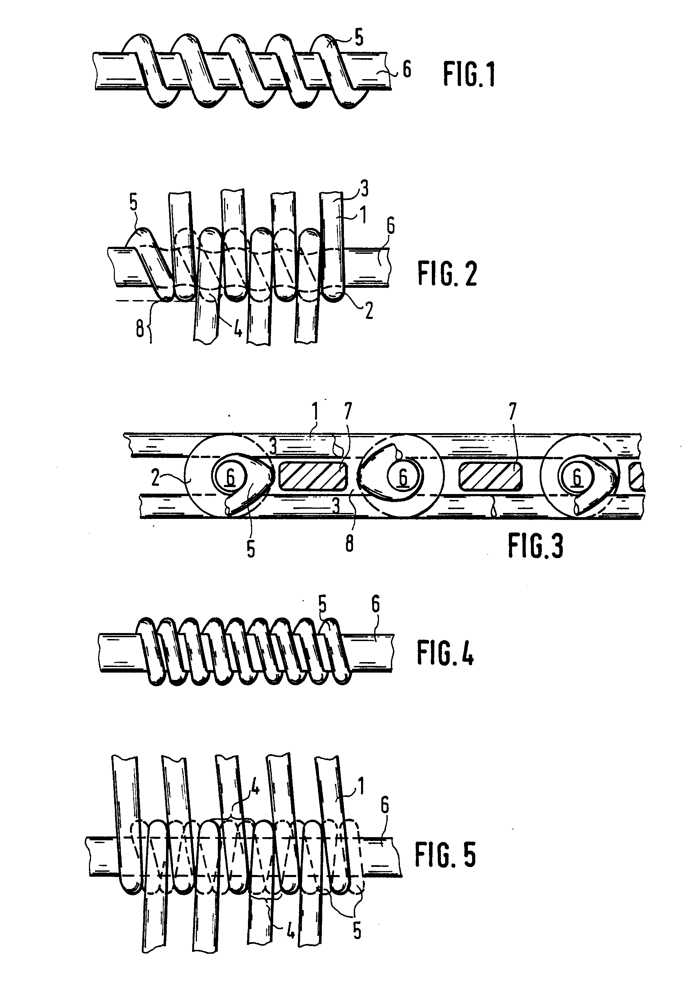

Fig. 1 zeigt einen Steckdraht 6, der mit einer Füllspirale 5 eng umwickelt ist. Steckdraht 6 und Füllspirale 5 sind Monofile, wobei der Durchmesser des Füllspiralen-Monofils wesentlich kleiner ist als der des Steckdraht-Monofils.

Fig. 2 zeigt den Ausschnitt eines Spiralgliederbandes, bei dem der von der Füllspirale 5 umschlungene Steckdraht 6 gemäß Fig. 1 verwendet ist. Das Spiralgliederband besteht in üblicher Weise aus Spiralen 1, die im Querschnitt ovale Form haben, so daß sie geradegestreckte Windungsschenkel 3 und Windungsbögen 2 aufweisen. Benachbarte Spiralen 1 sind reißverschlußartig ineinandergefügt. In Längsrichtung der Spiralen 1 gesehen, umschließen die miteinander kämmenden Windungsbögen 2 einen Kanal, in den der Steckdraht 6 eingeschoben ist.

Die Spiralen 1 haben üblicherweise eine Steigung gleich dem doppelten Durchmesser des Spiralenmonofils. Bei der in Fig. 2 dargestellten Ausführungsform haben die Füllspiralen 5 die gleiche Steigung wie die Spiralen 1, so daß die Windungsbögen 2 der Spiralen 1 zwischen die Windungen der Füllspirale 5 fallen. Der Raum 4 zwischen aufeinanderfolgenden Windungsbögen 2 jeder Spirale 1 wird auf diese Weise durch den dazwischenfallenden Abschnitt einer Füllspirale 5 ausgefüllt.

Der Raum 4 wird durch die aufeinanderfolgenden Windungsbögen 2 einer Spirale 1 in Querrichtung des Spiralgliederbandes begrenzt. In Längsrichtung wird er nach einer Seite durch den Steckdraht 1 begrenzt, während er nach der anderen Seite zum Innenraum 8 jeder Spirale 1 offen ist. Senkrecht zur Ebene des Spiralgliederbandes wird der Raum 4 durch die Windungsschenkel 3 begrenzt, die durch den Windungsbogen 2 einer benachbarten Spirale verbunden werden.

Die Herstellung des mit der Füllspirale 5 umwickelten Steckdrahtes 6 erfolgt in der Weise, daß die Füllspirale 5 um den Steckdraht 6 gewickelt wird und danach durch eine Hitzebehandlung auf den Steckdraht 6 aufgeschrumpft wird. Die Füllspirale 5 ist dadurch ausreichend fest auf dem Steckdraht 6 angeordnet, damit sie sich während des Einsteckens des Steckdrahtes 6 in den von den Windungsbögen 2 zweier Spiralen 1 gebildeten Kanal nicht verschiebt. Durch eine sehr große Krafteinwirkung, wie sie während des Thermofixierens des Spiralgliederbandes durch die ausgeübte Längsspannung erfolgen kann, läßt sich die Füllspirale 5 andererseits etwas auf dem Steckdraht 6 verschieben. Dadurch können geringe Unterschiede in der Steigung der Füllspirale 5 und der Spiralen 1 ausgeglichen werden.

Figur 3 zeigt einen kleinen Ausschnitt aus einem Spiralgliederband, wobei die Steckdrähte 6 entsprechend Fig. 1 und 2 mit Füllspiralen 5 umwickelt sind. In den in Fig. 3 erkennbaren freien Innenraum 8 der Spiralen 1 wird üblicherweise zur Verringerung der Luftdurchlässigkeit Füllmaterial 7 eingebracht.

Die Figuren 4 und 5 zeigen eine Ausführungsform, bei der die Steigung der Füllspirale 5 kleiner ist als die der Spiralen 1. In Fig. 4 ist die Füllspirale 5 nahezu Windung an Windung gewickelt. Beim Spannen des Spiralgliederbandes während des Thermofixierens - schneiden die Windungsbögen 2 der Spiralen 1 zwischen den Windungen der Füllspirale 5 ein und verdrängen diese, so daß die Windungen der Füllspirale 5 in die Räume 4 zwischen benachbarten Windungsbögen 2 derselben Spirale 1 zu liegen kommen und diese Räume 4 ausfüllen.

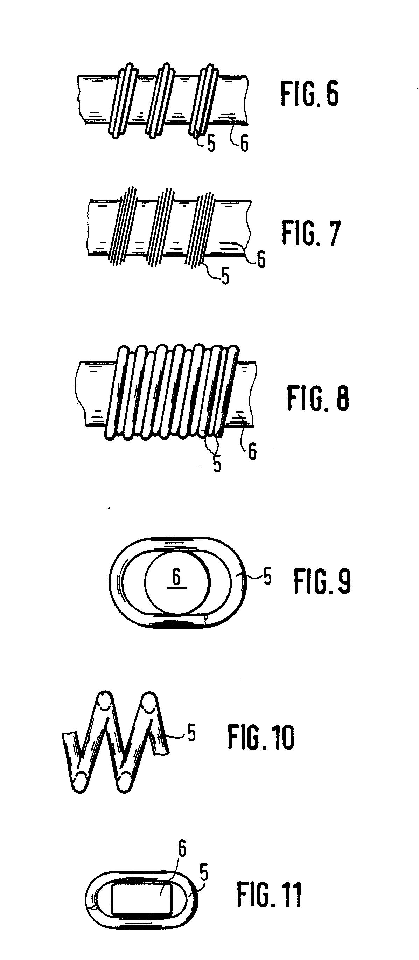

Um das Eindringen und Verdrängen der Windungen der Füllspirale 5 zu erleichtern, können die Füllspiralen 5 auch aus zwei oder mehreren dünnen Monofilamenten bestehen, wie es in Fig. 6 gezeigt ist. Wie in Fig. 7 gezeigt, können die Füllspiralen 5 auch aus einem Multifilament gewickelt sein. Eine weitere Möglichkeit besteht darin, mehrere Füllspiralen 5 übereinander zu wickeln, wie es in Fig. 8 gezeigt ist.

Bei Spiralen sehr großer Länge, z.B. von mehreren Metern, kann es bisweilen erforderlich sein, die Windungen eines Teils der Füllspirale 5 um größere Abstände zu verschieben. Hierzu wird die Füllspirale 5 zweckmäßig so um den Steck draht 6 gewickelt, daß die Füllspirale 5 an gegenüberliegenden Stellen nicht am Steckdraht 6 anliegt, wie es Fig. 9 zeigt. Die nicht am Steckdraht 6 anliegenden Teile der Windungen der Füllspirale 5 dringen dabei im fertigen Spiralgliederband in die Räume 4 zwischen benachbarten Windungsbögen 2 ein. Auch hierbei können die Füllspiralen 5 so ausgeführt sein, wie es in Verbindung mit den Figuren 6 bis 8 beschrieben ist.

Die Füllspiralen 5 können aus Polyester, Polyamid, Polyacryl oder ähnlichen Kunststoffen bestehen. Die Füllspiralen 5 können insbesondere aus einem Kunststoff, z.B. Polypropylen, bestehen, der weicher ist oder einen niedrigeren Schmelzpunkt besitzt als der Kunststoff der Steckdrähte 6. Dadurch lassen sich die Windungen der Füllspirale 5 beim Thermofixieren des Spiralgliederbandes leichter verdrängen. Auch andere textile Rohstoffe, z.B. Wolle und Baumwolle, können wegen ihrer Weichheit für die Füllspiralen 5 verwendet werden. Ebenso sind Mischungen dieser Rohstoffe möglich, was sich insbesondere bei den Ausführungsformen gemäß den Figuren 6 bis 8 anbietet.

Bei der Verwendung von Füllspiralen 5 aus Kunststoff mit niedrigem Schmelzpunkt, z. B. Polypropylen, besteht bisweilen die Gefahr, daß beim Thermofixieren die Füllspiralen zwischen dem Steckdraht 6 und den Spiralen 1 so stark eingeklemmt werden, daß sie durchtrennt werden. Dem kann durch die Verwendung von Kern-Mantel-Fäden für die Füllspiralen 5 begegnet werden, wobei der Kern aus hartem Material, z.B. Polyester besteht, während der Mantel aus weicherem Material mit niedrigerem Schmelzpunkt, z.B. dem erwähnten Polypropylen, besteht. Damit der Kern trotz des dafür verwendeten harten Kunststoffes eine möglichst große Anpassungsfähigkeit im Querschnitt besitzt, besteht er vorzugsweise aus einem Multifilament. Da Kern-Mantel-Fäden allgemein bekannt sind und diese Ausführungsform ansonsten der der Figuren 1 bis 5 entspricht, ist sie nicht gesondert dargestellt.

Die Füllspiralen 5 bilden eine Umhüllung des Steckdrahtes 6, wobei das Material dieser Umhüllung, d.h. die einzelnen Windungen der Füllspirale 5, diskontinuierlich längs des Steckdrahtes 6 angeordnet ist, so daß dieses Material nicht erst durch nachfolgende plastische Verformung verschoben werden muß, wie dies z.B. bei einer Umhüllung der Fall ist, die aus einer kontinuierlichen Ummantelung besteht (US 4,500,590). Bei dem erfindungsgemäßen Spiralgliederband läßt sich das Material der Umhüllung dadurch besser in den Räumen 4 zwischen den Windungsbögen einer Spirale 1 konzentrieren.

Diejenigen Teile der Füllspirale 5, die im fertigen Spiralgliederband oberhalb und unterhalb der Steckdrähte 6 zu liegen kommen, werden bei der Thermofixierung flachgedrückt und stören im allgemeinen nicht weiter. Gegebenenfalls kann für die Spiralen 1 ein Monofil mit unrundem Querschnitt verwendet werden. Es kann z.B. vorteilhaft sein, für die Spiralen 1 ein Monofilament mit einem Querschnitt zu verwenden, der eine nach innen zeigende Kante besitzt, wie es Fig. 10 dargestellt ist. Die Windungsbögen 2 einer solchen Spirale 1 dringen leichter zwischen die Windungen der Füllspirale 5 ein, und durch diese Querschnittsform wird die Einschneidwirkung der Windungsbögen 2 verstärkt.

Durch die Verwendung eines Steckdrahtes 6 mit flachem Querschnitt, wie es in Fig. 11 gezeigt ist, läßt sich besonders einfach erreichen, daß die Füllspiralen 5 an den in der Ebene des Spiralgliederbandes einander gegenüberliegenden Stellen nicht am Steckdraht 6 anliegen, wie es in Verbindung mit Fig. 9 beschrieben wurde. Durch die Verwendung eines Steckdrahtes 6 mit flachem, rechteckförmigem Querschnitt werden außerdem die Abmessungen der aus dem Steckdraht 6 und der Füllspirale 5 gebildeten Einheit senkrecht zur Ebene des Spiralgliederbandes verringert, wodurch sich der mit der Füllspirale 5 umwickelte Steckdraht 6 leichter in den Kanal einschieben läßt, der von den überlappenden Windungsbögen zweier benachbarter Spiralen 1 gebildet wird.

### Beispiel 1

Ein Spiralgliederband wird hergestellt aus Spiralen 1, die aus Polyester-Monofil von 0,6 mm Durchmesser (Type 933 von Hoechst) bestehen, und einem Steckdraht, der aus Polyester von 0,9 mm Durchmesser (Type 903 von Hoechst) besteht und mit einem Polyamid-Monofilament von 0,4 mm Durchmesser und einer Steigung von 1,2 mm als Füllspirale 5 umwickelt ist. Die Windungsbögen 2 legen sich zwischen die Windungen der Füllspirale 5 und graben sich beim Thermofixieren 0,15 mm tief in den Steckdraht 6 ein. Die Windungsbögen 2 selbst flachen sich in dem Bereich, in dem sie an dem Steckdraht 6 anliegen, etwas ab, so daß sich hier nur noch eine Dicke von etwa 0,55 mm aufweisen. Unter Berücksichtigung der Eingrabtiefe von 0,15 mm werden die Räume 4 zwischen benachbarten Windungsköpfen daher genau ausgefüllt. Nach Einziehen eines geflochtenen Schlauches als Füllmaterial 7 in den freien Innenraum 8 der Spiralen 1 hat das Spiralgliederband eine Durchlässigkeit von etwa 65 cfm.

### Beispiel 2

Es wird ein Spiralgliederband ähnlich dem von Beispiel 1 hergestellt, wobei die Steigung der Füllspiralen jedoch 0,5 mm beträgt. Die Durchlässigkeit des fertigen Spiralgliederbandes beträgt 60 cfm.

### Beispiel 3

Es wird ein Spiralgliederband ähnlich dem von Fig. 1 hergestellt, wobei der Steckdraht jedoch einen Durchmesser von 0,8 mm besitzt und die Steigung der Spiralen 1,2 mm beträgt. Die Füllspiralen 5 bestehen aus Diolen-Multifil von 1100 dtex, das mit Polypropylen ummantelt ist, wobei der Gesamtdurchmesser der Füllspirale 5 0,6 mm beträgt. Die Durchlässigkeit des fertigen Spiralgliederbandes beträgt 76 cfm.

### Ansprüche

1. Spiralgliederband mit einer Vielzahl von Kunststoffspiralen, die aus flachen Windungsschenkeln und Windungsbögen bestehen, wobei die Windungsbögen einer Spirale reißverschlußartig mit den Windungsbögen der benachbarten Spiralen ineinandergreifen, und mit Steckdrähten, die in die Kanäle eingeschoben sind, die durch die ineinandergreifenden Windungsbögen jeweils zweier Spiralen gebildet werden, wobei der freie Raum zwischen nebeneinanderliegenden Windungsbögen einer Spirale ausgefüllt ist, **dadurch gekennzeichnet,** daß die Ausfüllung des Raumes (4) zwischen den nebeneinanderliegenden Windungsbögen (2) einer Spirale durch Füllspiralen (5) erfolgt, die eng um die Steckdrähte (6) gewickelt sind.

2. Spiralgliederband nach Anspruch 1, **dadurch gekennzeichnet,** daß der im Schnitt senkrecht zur Längsachse der Spiralen (1) gesehen freie Innenraum (8) der Spiralen (1) durch ein Füllmaterial (7) ausgefüllt ist.

3. Spiralgliederband nach Anspruch 1 oder 2, **dadurch gekennzeichnet,** daß das Material der Füllspiralen (5) einen niedrigeren Schmelzpunkt hat als das der Spiralen (1) und der Steckdrähte (6).

4. Spiralgliederband nach einem der Ansprüche 1 bis 3, **dadurch gekennzeichnet,** daß die Füllspiralen (5) aus Kunststoffmonofilamenten bestehen und die gleiche Steigung wie die Spiralen (1) aufweisen.

5. Spiralgliederband nach einem der Ansprüche 1 bis 3, **dadurch gekennzeichnet,** daß die Füllspiralen (5) aus Kunststoff-Monofilamenten mit einem kleineren Durchmesser als die Spiralen - (1) bestehen und eine kleinere Steigung als die Spiralen (1) aufweisen.

6. Spiralgliederband nach einem der Ansprüche 1 bis 3, **dadurch gekennzeichnet,** daß die Füllspiralen (5) aus Kunststoff-Multifilamenten bestehen.

7. Spiralgliederband nach Anspruch 1 oder 2, **dadurch gekennzeichnet,** daß die Füllspiralen (5) Kern-Mantel-Fäden sind, wobei das Material des Kerns einen ähnlichen Schmelzpunkt wie das der Spiralen (1) und der Steckdrähte (6) und das Material des Mantels einen niedrigeren Schmelzpunkt hat.

8. Spiralgliederband nach Anspruch 7, **dadurch gekennzeichnet,** daß der Kern ein Multifilament ist.

9. Spiralgliederband nach einem der Ansprüche 1 bis 8, **dadurch gekennzeichnet,** daß die Füllspiralen (5) in Längsrichtung des Spiralgliederbandes einen geringen Abstand von den Steckdrähten (6) aufweisen.

FIG.1

FIG. 2

FIG.3

FIG.4

FIG. 5

FIG. 6

FIG. 7

FIG. 8

FIG. 9

FIG. 10

FIG. 11

**Europäisches Patentamt**

# EUROPÄISCHER RECHERCHENBERICHT

## EINSCHLÄGIGE DOKUMENTE

EP 86113237.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | <u>DE - A - 3 221 255</u> (STIEG)<br>* Fig. 8a,8b,10 *<br><br>-- | 1,3-5, 9 | D 21 F  1/10 |
| A | <u>AT - B - 377 800</u> (SCAPA)<br>* Gesamt *<br><br>-- | 1,2 | |
| D,A | <u>US - A - 4 500 590</u> (SMITH)<br>* Fig. 1,2 *<br><br>---- | 1,2 | |

| | RECHERCHIERTE SACHGEBIETE (Int. Cl.4) |
|---|---|
| | D 21 F<br>B 65 G |

Der vorliegende Recherchenbericht wurde für alle Patentansprüche erstellt.

| Recherchenort | Abschlußdatum der Recherche | Prüfer |
|---|---|---|
| WIEN | 11-12-1986 | HOFMANN |